Europäisches Patentamt

European Patent Office

Office européen des brevets

(11) Publication number : **0 509 809 A2**

# EUROPEAN PATENT APPLICATION

(21) Application number : **92303421.9**

(22) Date of filing : **15.04.92**

(51) Int. Cl.⁵ : **G01B 11/02**

(30) Priority : **17.04.91 ZA 912874**

(43) Date of publication of application :
**21.10.92 Bulletin 92/43**

(84) Designated Contracting States :
**CH DE FR GB LI SE**

(71) Applicant : **DE BEERS INDUSTRIAL DIAMOND DIVISION (PROPRIETARY) LIMITED**
**Debid House, Corner Amethyst Street & Crownwood Road Theta**
**Johannesburg, Transvaal (ZA)**

(72) Inventor : **Sergeant, Peter James**
**2 Miriam Gardens, Countesses Avenue Windsor East, Randburg, Transvaal (ZA)**
Inventor : **Valbom, Domingos Manuel Coelho**
**55 Village Road**
**Farrarmere, Benoni, Transvaal (ZA)**

(74) Representative : **Senior, Alan Murray et al**
**J.A. KEMP & CO., 14 South Square Gray's Inn London WC1R 5LX (GB)**

(54) Crusher roll wear monitoring apparatus and method.

(57) The method is used to monitor the wear undergone by a round cylindrical surface (12) of a crusher or grinder roll (14). In the method, the circumference of the roll (14) is scanned, typically by a laser beam, at various positions along the length of the roll (14) to obtain actual values for the distance of the roll surface (12) from a datum. These actual values are compared with corresponding, predetermined distance values to determine any variance between the actual distance values and the predetermined distance values.

EP 0 509 809 A2

## BACKGROUND TO THE INVENTION

THIS invention relates to the monitoring of roll wear in a crusher or grinder.

Conventional high pressure roll crushers makes use of cylindrical crushing rolls to comminute mined ore. Because of the crushing action that is required of them, the rolls are usually hard-faced or are cast and surface hardened to a depth of, say, 10mm . Beneath the hard surface, the roll material is relatively softer and prone to more rapid wear, leading to possible damage to the whole roll crushing apparatus.

It would be beneficial to be able to monitor, at intervals, the wear undergone by the surface of a roll, since this would enable maintenance operations to be carried out timeously and predictions to be made of the anticipated remaining roll life.

## SUMMARY OF THE INVENTION

A first aspect of the invention provides a method of monitoring the wear undergone by a round cylindrical surface of a crusher or grinder roll, the method comprising the steps of scanning the circumference of the roll at various positions along the length of the roll to obtain actual values for the distance of the roll surface from a datum, and comparing the actual distance values with corresponding, predetermined distance values to determine any variance between the actual distance values and the predetermined distance values.

The method may include the further step of determining the extent of volumetric loss from the surface of the roll, as a result of wear, from the variance between actual and predetermined distance values. The method may also include the further step of determining the mass loss from the surface of the roll, as a result of wear, from the determined volumetric loss and the known density of the roll.

In the preferred form of the invention, the roll circumference is scanned by a laser beam.

The method of the invention may involve the following steps:

(a) providing a distance measuring device capable of measuring the distance of points on the roll surface from a datum;

(b) moving the distance measuring device in lengthwise increments relative to the length of the roll;

(c) causing the distance measuring device to scan the circumference of the roll at different lengthwise positions of the device so that the distance measuring device produces, at each such lengthwise position, values for the actual distance of the roll surface from the datum; and

(d) comparing the actual distance values with corresponding, predetermined distance values to determine any variances between such values.

Another aspect of the invention provides apparatus for monitoring the wear undergone by a round cylindrical surface of a crusher or grinder roll, the apparatus comprising scanning means for scanning the circumference of the roll at various positions along the length of the roll to produce values for the actual distance of the roll surface from a datum, and processor means for comparing the actual distance values with corresponding, predetermined distance values to determine any variances between the actual and predetermined distance values.

The preferred apparatus includes:

(a) a distance measuring device for producing values for the distance from a datum to the surface of the roll;

(b) means for moving the distance measuring device in lengthwise increments relative to the length of the roll;

(c) control means for causing the distance measuring device to scan the circumference of the roll at different lengthwise positions thereof so that the distance measuring device produces, at each such lengthwise position, a value for the distance of the roll surface from the datum; and

(d) processor means for comparing the actual values so produced with corresponding, predetermined values, thereby to determine any variance between the actual and predetermined values.

The distance measuring device may be mounted on a carriage arranged to traverse, with incremental movements, a path parallel to the roll axis. Conveniently the carriage is engaged in threaded fashion with a threaded worm rotated intermittently by a motor in such a manner as to move the carriage to each lengthwise position at which scanning is to take place. The carriage may then be halted at each lengthwise position at which scanning is to take place for a period of time sufficient for the distance measuring device to scan the full circumference of the roll at least once.

## BRIEF DESCRIPTION OF THE DRAWING

The invention will now be described in more detail, by way of example only, with reference to the accompanying drawings in which:

**Figure 1** illustrates an apparatus of the invention in diagrammatic form; and

**Figure 2** diagrammatically illustrates the principle of operation of the distance measuring device.

## DESCRIPTION OF AN EMBODIMENT

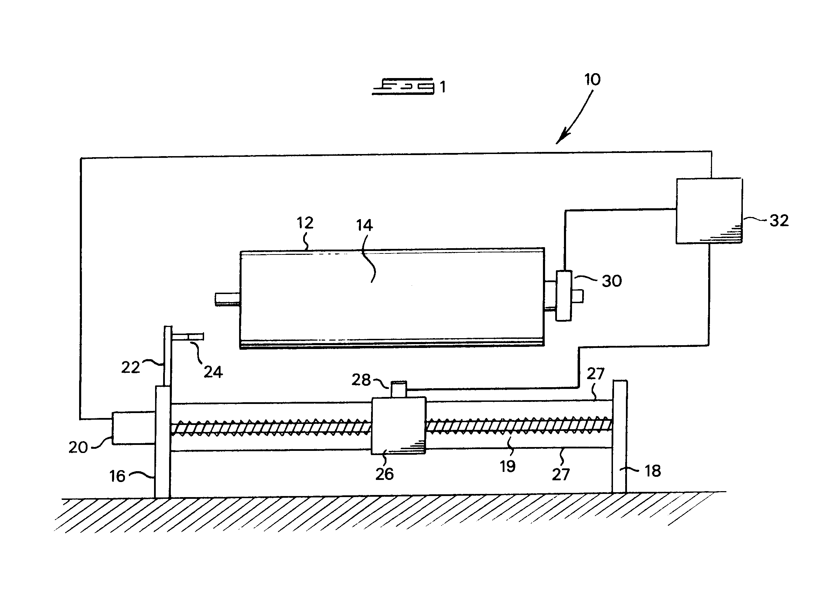

In Figure 1, the numeral 10 refers generally to apparatus which is used to monitor the wear undergone by the round cylindrical surface 12 of a crusher roll 14 that has been used in ore crushing operations.

Located adjacent the roll are two spaced apart brackets 16 and 18. A threaded worm 19 is supported rotatably by the brackets and is driven in rotation by a stepper motor 20 mounted on the bracket 16. The axis of the worm gear is parallel to that of the roll 14. A post 22 extends upwardly from the bracket 16 and supports a calibration plate 24 lying in a plane at an accurately known position.

In the illustrated case, the worm 19 is situated beneath the roll 14, but this need not necessarily be the case. In other embodiments, the worm can be above or to the side of the roll. In fact in most cases, access is easier from the side of the roll.

Mounted on the worm 19 is a carriage 26 which has threads engaging the threads of the worm. As the worm is rotated by the stepper motor, the carriage 26 is caused to move incrementally along the worm from left to right or right to left in the drawing, depending on the direction of rotation of the worm. The carriage is guided in its movement along the worm by means of guide rails 27.

The carriage supports a laser-based distance measuring device 28, typically a KEYENCE LB-01 laser displacement sensor controlled by a KEYENCE LB-60 controller. The distance measuring device 28 determines the distance of the roll surface 12 from a fixed datum.

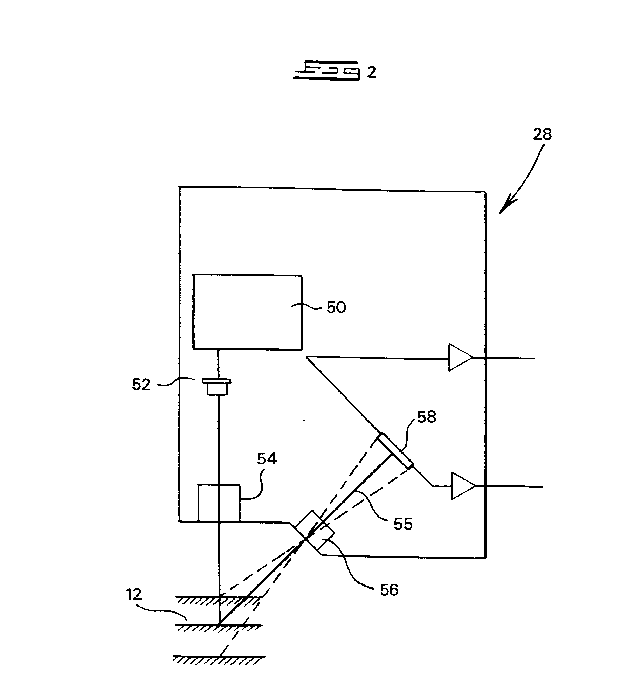

Figure 2 illustrates the basic principle of operation of the device 28. In Figure 2, a semiconductor laser driver circuit 50 drives a semiconductor laser 52. The laser beam emitted by the laser 52 is converged by a lens 54 and impinges on the surface 12 from which diffuse reflection takes place. Reflected rays 55 are converged by a lens 56 and cast onto an optical position detector 58 as a spot of light. From a comparison of the various reflected rays in Figure 2 it will readily be apparent that as the distance between the surface 12 and the device 28 changes, the position of the spot on the optical position sensor 58 also changes. The latter movement is converted to an electrical signal related to the distance of the laser from the surface 12.

This type of distance measuring device is conventional and the details of its operation will be well known to those skilled in the art of such devices.

Mounted adjacent one end of the roll 14 is a monitoring device 30 which is sensitive to the rotational position of the roll 14 as the roll rotates about its axis. The apparatus also includes a microprocessor 32 which is responsive to the monitoring device 30 and which controls the stepper motor 20 and the distance measuring device 28.

At the commencement of operations, the distance measuring device must be calibrated. This is achieved by actuating the stepper motor to move the carriage 26 and distance measuring device 28 to a position opposite the calibration plate 24. Since the positions of the plate 24 and distance measuring device are known, the distance of the plate 24 from the device 28 is also known. The distance measuring device 28 is actuated to measure the distance to the calibration plate and the system is calibrated in accordance with any difference that may exist between the measured and known distances.

The carriage 26 and distance measuring device 28 are then brought to a position opposite one end of the roll 14. At a certain rotational position of the roll 14, as detected by the monitoring device 30, the distance measuring device is actuated by the microprocessor 32 and commences scanning the surface 12 of the roll. The distance measuring device measures the distances to successive points on the roll surface at this axial position. At the end of a full circumferential scan, the operation of the distance measuring device is terminated by the microprocessor, operating in response to the monitoring device 30.

The stepper motor is then energised by the microprocessor to move the carriage 26 and distance measuring device 28 through a predetermined increment along the worm. The carriage is halted at this point and another full circumferential scan is carried out. Thereafter the carriage is again moved through one axial increment and the process is repeated.

The process is repeated for each new axial position of the carriage 26 and distance measuring device 28 until eventually the opposite end of the roll is reached. Signals corresponding to the distances measured by the distance measuring device for each scan are fed to the microprocessor.

Any further incremental movement of the distance measuring device, to a position past the end of the roll can readily be detected by the microprocessor which is set to terminate the operation of the apparatus as soon as a distance greater than a predetermined distance is recorded, i.e. as soon as the laser beam from the distance measuring device 28 no longer impinges on the roll surface 12.

The axial increment through which the distance measuring device is moved for each successive scan of the roll circumference will generally be quite small, so that a reliable profile of the roll surface is built up from the successive scans.

The microprocessor stores all the distance measurement data generated by the distance measuring device 28. This data is then compared with corresponding, predetermined data. The predetermined data may, for instance, be hypothetical data for an ideal roll surface which has previously been stored in the ROM of the microprocessor. Alternatively, the predetermined data may be data accumulated from distance measurements conducted on the same roll 14 when it was new or newly refurbished.

The comparison may involve a simple subtraction of corresponding distance measurements from one another to identify variances. Such variances may, for instance, indicate sudden irregularities in the actual roll surface. Such irregularities may in practice be due to localised or general wear or cracking or pitting.

From the comparison of distance values it is possible, if desired, to compute a value for volumetric loss at the roll surface, i.e. the volume of roll surface lost as a result of wear. From the latter value it would also be possible to compute a value for mass loss at the roll surface if the density of the roll surface material is known. If the crushing rate, i.e. t/hour handled by the crusher in which the roll 14 is used is known, it would also be possible to compute a ratio of mass loss at the roll surface to tons of ore fed to the crusher.

With this range of possible wear determinations, it may also be possible to predict the remaining life of the roll 14 so that forward planning is facilitated.

The mathematical profile of distance measurements can be displayed graphically to give a visual indication of the state of wear of the roll surface. Alternatively, details of the actual roll surface profile can be fed directly to a computer-controlled roll surface grinding device which would then grind the roll surface automatically to remove irregularities and to maintain the cylindrical nature of the roll surface.

The system may also be arranged to produce an alarm signal if a sudden and excessive irregularity in the roll surface is detected.

## Claims

1. A method of monitoring the wear undergone by a round cylindrical surface (12) of a crusher or grinder roll (14), characterised in that the method comprises the steps of scanning the circumference of the roll (14) at various positions along the length of the roll (14) to obtain actual values for the distance of the roll surface (12) from a datum, and comparing the actual distance values with corresponding, predetermined distance values to determine any variance between the actual distance values and the predetermined distance values.

2. A method according to claim 1 and characterised by the further step of determining the extent of volumetric loss from the surface (12) of the roll (14), as a result of wear, from the variance between actual and predetermined distance values.

3. A method according to claim 2 characterised by the further step of determining the mass loss from the surface (12) of the roll (14), as a result of wear, from the determined volumetric loss and the known density of the roll (14).

4. A method according to any one of the preceding claims characterised in that the roll circumference is scanned by a laser beam.

5. A method of monitoring the wear undergone by a round cylindrical surface (12) of a crusher or grinder roll (14), characterised in that the method comprises the steps of:

(a) providing a distance measuring device (28) capable of measuring the distance of points on the roll surface (12) from a datum;

(b) moving the distance measuring device (28) in lengthwise increments relative to the length of the roll (14);

(c) causing the distance measuring device (28) to scan the circumference of the roll at different lengthwise positions of the device (28) so that the distance measuring device produces, at each such lengthwise position, values for the actual distance of the roll surface (12) from the datum; and

(d) comparing the actual distance values with corresponding, predetermined distance values to determine any variances between such values.

6. Apparatus for monitoring the wear undergone by a round cylindrical surface (12) of a crusher or grinder roll, characterised in that the apparatus comprises scanning means (28) for scanning the circumference of the roll (14) at various positions along the length of the roll (14) to produce values for the actual distance of the roll surface (12) from a datum, and processor means (32) for comparing the actual distance values with corresponding, predetermined distance values to determine any variances between the actual and predetermined distance values.

7. An apparatus according to claim 6 characterised in that it includes:

(a) a distance measuring device (28) for producing values for the distance from a datum to the surface (12) of the roll (14);

(b) means (19, 20, 26) for moving the distance measuring device (28) in lengthwise increments relative to the length of the roll (14);

(c) control means (30, 32) for causing the distance measuring device (28) to scan the circumference of the roll (14) at different lengthwise positions thereof so that the distance measuring device (28) produces, at each such lengthwise position, a value for the distance of the roll surface (12) from the datum; and

(d) processor means (32) for comprising the actual values so produced with corresponding predetermined values, thereby to determine any variance between the actual and predetermined values

8. An apparatus according to claim 7 characterised in that the distance measuring device (28) is arranged to project a laser beam at the circumferential surface (12) of the roll (14).

9. An apparatus according to claim 8 characterised in that the distance measuring device (28) is mounted on a carriage (26) arranged to traverse, in incremental movements, a path parallel to the roll axis.

10. An apparatus according to claim 9 characterised in that the carriage (26) is engaged in threaded fashion with a threaded worm (19) rotated intermittently by a motor (20) in such a manner as to move the carriage (26) to each lengthwise position at which scanning is to take place.

11. An apparatus according to claim 10 characterised in that the carriage (26) is halted at each lengthwise position at which scanning is to take place for a period of time sufficient for the distance measuring device (28) to scan the full circumference of the roll (14) at least once.

FIG. 1

FIG 2